# EUROPEAN PATENT APPLICATION

(11) **EP 0 671 567 A1**
(43) Date of publication of application: **13.09.1995**
(21) Application number: 95102275.5
(22) Date of filing: 17.02.1995
(51) Int. Cl.: F16C 33/66

(54) **Rolling bearings**

(30) Priority: 11.03.1994 GB 9404813
(71) Applicant: NORMALAIR-GARRETT (HOLDINGS) LIMITED, Yeovil Somerset, BA20 2YB (GB)
(72) Inventor: Murray, Brian Desmond Allan, Somerset (GB)
(74) Representative: Lucking, David John

(57) **Abstract**

A rolling bearing (16) comprises an outer ring member (19) which is spaced from an inner ring member (18) by means of a plurality of rolling bearing elements (20), both the inner ring member (18) and the outer ring member (19) having at least one passage (21,22) therein which extends between radially inner and outer surfaces of the ring members (18) and (19) to provide for the passage of lubricant to and from the rolling bearing elements (20) of the bearing (16).

## Description

### Description of Invention

This invention relates to a rolling bearing and also to a lubrication system for a shaft supported by such a rolling bearing.

Rolling bearings comprise an inner ring member separated from a outer ring member by means of a plurality of rolling bearing elements which may be ball bearings, roller bearings or needle bearings. When such bearings are employed to support shafts rotating at relatively low speeds i.e. below 20000 rpm, they are adequately lubricated by grease. However grease is not a suitable lubricant where higher rotational speeds are involved because the grease tends to break down and be ejected from the bearing.

An alternative lubricant for such bearings is oil. Oil splash lubrication in which oil is carried to a bearing by a rotating gear and oil level lubrication in which the lowest portion of the bearing is immersed in a oil sump are used for lower rotational speed applications, but again are not satisfactory where higher rotational speeds are involved. An oil wick system in which oil from a sump is fed by a wick to an oil slinger at one end face of the bearing is suitable for use at higher rotational speeds but may give rise to dynamic problems when used to support that length of an electric motor output shaft which projects externally of the motor. Ideally the shaft overhang length, that is the length of the shaft which projects externally of the motor, should be kept at a minimum to avoid shaft whirl problems. However additional shaft overhang length is required to accommodate known oil wick feed lubrication systems.

It is known from for example, US patent 5,009,524 to provide a drilling in a rolling bearing which extends from a radially outer surface of an outer ring member of the bearing to the rolling bearing elements to provide for the passage of lubricant to the rolling bearing elements.

According to the first aspect of the invention we provide a rolling bearing comprising an outer ring member spaced from an inner ring member by means of a plurality of rolling bearing elements characterised in that the inner ring member and the outer ring member each have at least one passage extending between radially inner and outer surfaces thereof.

By means of the present invention, a path is provided for lubricant from the innermost surface of the bearing and thus the bearing may be used in a closed system which provides for circulation of lubricant such that fresh lubricant may continually be provided to the rolling bearing elements.

According to a second aspect of the invention we provide a lubrication system for a drive shaft supported by a rolling bearing according to the first aspect of the invention in which the inner ring member is mounted on the drive shaft and the outer ring member is mounted in a housing, the system comprising a lubricant feed passage extending axially or at least generally parallel to the axis of the shaft from one end of the shaft over at least part of the length thereof, at least one passage in the shaft extending between the feed passage and the outer surface of the shaft where it communicates with the or a passage provided in the inner ring member of the rolling bearing.

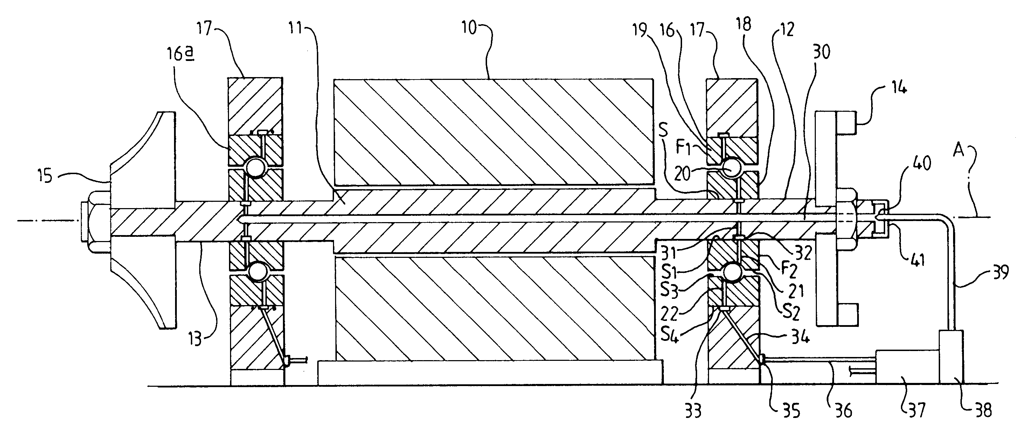

The invention will now be described with reference to the accompanying drawing which is an illustrative cross-sectional view through an electric motor showing output shaft lengths at either end of the motor carried in bearings in accordance with the present invention.

Referring to the drawings there is shown an electric motor 10 which has an output shaft 11 having projecting shaft lengths at 12 and 13 at opposite ends of the motor 10. The shaft length 14 carries at its end portion a fan wheel 14 and the shaft length 13 carries at its end portion a compressor wheel 15. A rolling bearing 16 mounted in a housing 17 supports the shaft length 12 between the motor end face and the shaft end whilst the similar rolling bearing 16a mounted in a housing 17 also supports the shaft length 13 at the opposite end of the motor 10. As both bearings 16, 16a are constructed substantially identically, only one (16) will be described.

The bearing 16 comprises an inner ring member 18 mounted on the extending shaft length 12 of the shaft 11, an outer ring member 19 mounted in the housing 17, and plurality rolling bearing elements 20 which in this embodiment comprise ball bearings carried in a cage (not shown) but could instead comprise needle roller bearings or radial roller bearings if desired.

A plurality of passages 21, in this case each provided by drilling, extend generally radially through the inner ring member 18 from an inner circumferential surface S1 to an outer circumferential surface S2. A plurality of passages 22, again provided by drilling extend radially through the outer ring member 19 from the inner circumferential surface S3 to an outer circumferential surface S4. In this embodiment, the radial drillings 22 of the outer ring member 19 are offset from the radial drillings 21 of the inner ring member 18 along the rotational axis A of the bearing 16. Shields or seals which are not shown, are preferably provided at each axial end face F1 and F2 of the bearing 16 to retain lubricant internally of the bearing 16.

The system for lubricating the bearings 16 at either end of the motor shaft 11, comprises a feed passage 30, which again may be provided by drilling, which extends axially of the output shaft 11 from an end face of the shaft length 12, and terminates at the location of the bearing 16a supporting the extended shaft length 13. At the location of each bearing 16, 16a there is a further passageway 31, again in this embodiment being provided as a generally radial drilling, connects between the feed passage 30 and a groove 32 provided in an outer surface of the shaft 11 around the circumference thereof. The radial drillings 21 in the inner ring member 18 connect between the groove 32 and the interior of the bearing where the rolling elements 20 are provided. The radial drillings 22 in the outer ring member 19 connect between the interior of the bearing where the rolling elements 20 are provided, and a groove 33 which is provided in the housing 17 so as to extend circumferentially around the outer ring member 19.

Within the housing 17, there is provided a return passage 34 which may again be provided as a drilling, which connects the groove 33 with a connector 35 which connects the return passage 34 to a pipe 36 which leads from the connector 35 to a lubricant reservoir 37. An oil pump 38 feeds lubricant from the storage reservoir 37 by means of a further pipe 39 to a jet nozzle 40 which is axially aligned with the open end of the feed passage 30 which extends axially of the shaft 11. Suitable sealing means 41 are provided with the shaft end and with the jet nozzle 40, for containment of lubricant.

In operation, lubricant such as oil from the reservoir 37 is injected by the jet nozzle 40 into the axial feed passage 30 and travels along the shaft 11. At the locations of the bearing 16 16a the oil passes into the radial drillings 31 in the shaft 11, helped by the spinning effect of the shaft 11, and hence into the groove 32 and through the radial drillings 21 in the inner ring member 18 to the rolling elements 20 in the interior of the bearing. Oil passes out of the bearing to return to the reservoir 37 by means of the radial drillings 22 provided in the outer ring member 30, the groove 33 in the housing 17, and the return passage 34 in the housing, and the pipe 36.

Thus the bearings and the lubrication system of the present invention do not require any additional shaft length of over that which would be required for grease packed bearings so that the extended shaft lengths 12 and 13 can be kept to a minimum.

Various modifications are possible. For example, the feed passage 30 need not extend axially of the shaft 11 although this is preferred, but may extend generally parallel to the axis A of the shaft. Although each of the passages 31 in the shaft, 21, in the inner ring member and 22 in the outer ring member are described as being provided as radial drillings it will be appreciated that such the passages may be provided by other methods as desired, and that the passages 31, 21 and 22 need not extend exactly radially as described.

Instead of the circumferential groove 32 being provided in the shaft 11, such a groove could instead be provided in radially innermost surface S1 of the inner ring member 18, and the groove 33 described as being provided in the housing 17, could instead be provided in the radially outermost surface S4 of the outer ring member 19.

Means other than an oil pump 38 and jet nozzle 40 could supply oil to the feed passage 30 in the output shaft 11. Also if desired, such means could be provided at each end of the shaft 11 in which case the feed passage 30 would extend from each end face of the shaft 11 to the location of a respective bearing.

Instead of there being shields or seals at each axial end face F1, F2 of the bearing, these or other bearing means could be otherwise positioned e.g., within the bearing but preferably at or towards the axial end faces F1, F2, to retain lubricant within the bearing.

The reservoir 37 and oil pump 38, may provide for lubricant such as oil to any number of bearings 16 in accordance with the invention, as desired.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A rolling bearing (16) comprising an outer ring member (19) spaced from an inner ring member (18) by a plurality of rolling bearing elements (20) characterised in that the inner ring member (18) and the outer ring member (19) each have at least one passage (21,22) extending between radially inner and outer surfaces thereof.

2. A bearing according to claim 1 characterised in that the passages (21,22) in the inner (18) and/or outer (19) ring member extend generally radially of a bearing axis A.

3. A bearing according to claim 1 or claim 2 characterised in that the or a passage (21) through the inner ring member (18) is mis-aligned axially of the bearing (16) with the or a passage (22) through the outer ring member (19).

4. A bearing according to any one of claims 1 to 3 characterised in that a plurality of passages (21,22) are provided in each of the inner (18) and outer (19) ring members, each passage (21,22) extending between radially inner and outer surfaces of the respective ring members (18,19).

5. A bearing according to any one of claims 1 to 4 characterised in that the rolling bearing elements (20) are ball bearings, radial roller bearings, or needle roller bearings.

6. A bearing according to any one of claims 1 to 5 characterised in that end shields or seals are provided at or towards each axial end of the bearing for retention of lubricant internally of the bearing.

7. A lubrication system for a shaft (11) supported by a rolling bearing (16) according to any one of claims 1 to 6 in which the inner ring member (18) is mounted on the drive shaft (11) and the outer ring member (19) is mounted in a housing (17) characterised in that the system has a lubricant feed passage (30) extending axially or at least generally parallel to an axis (A) of the shaft (11) from one end of the shaft (11) over at least part of the length thereof, at least one passage (31) in the shaft (11) extending between the feed passage (30) and the an outer surface (S) of the shaft (11) where it communicates with the or a passage (21) provided in the inner ring member 18 of the rolling bearing (16).

8. A system according to claim 7 characterised in that where the at least one passage (31) in the shaft (11) which extends between the feed passage (30) of the shaft (11) and the outer surface (S) of the shaft (11) communicates with the or a passage (21) in the inner ring member (18) of the bearing (16), there is provided a groove (32) which extends circumferentially of the shaft (11) in the shaft (11) or in the inner surface of the inner ring member (18).

9. A system according to claim 7 or claim 8 characterised in that means (33 to 36) are provided for returning lubricant from the or each passage (22) provided in the outer ring member (19), to a reservoir (37).

10. A system according to any one of claims 7 to 9 characterised in that a groove (33) is provided at the radially outer surface of the outer ring member (19) of the bearing (16) which communicates with the or a passage (22) provided in the outer ring member (19) and with a return passage means (34 to 36) which returns lubricant to the reservoir (37).

11. A system according to any one of claims 7 to 10 characterised in that means are provided for feeding lubricant into and along the feed passage way (30) in the shaft from where the lubricant passes into the or a passage (31) in the shaft (11) which communicates with the or a passage (21) in the inner ring member (18).
